# DEMANDE DE BREVET EUROPEEN

(11) **EP 0 831 631 A1**
(43) Date de publication de la demande: **25.03.1998**
(21) Numéro de dépôt: 97202807.0
(22) Date de dépôt: 11.09.1997
(51) Int. Cl.: H04M 1/274

(54) **Procédé de recherche d'une entrée dans un recueil d'informations, et équipement électronique dans lequel un tel procédé est mis en oeuvre**

(30) Priorité: 18.09.1996 FR 9611384
(71) Demandeur: Philips Electronics N.V., 5621 BA Eindhoven (NL)
(72) Inventeur: Albesa, Franck, c/o Société Civile S.P.I.D.,, 75008 Paris (FR)
(74) Mandataire: Chaffraix, Jean

(57) **Abrégé**

L'invention concerne un procédé de recherche d'une entrée dans un recueil d'informations consultable à partir d'un équipement électronique.

Le procédé selon l'invention consiste à lancer une recherche dans le recueil après la saisie d'un caractère, puis à afficher la première entrée trouvée dans le recueil en plaçant le curseur de saisie sur le premier caractère discriminateur de cette entrée, pour permettre à l'utilisateur de la modifier, puis à relancer la recherche à partir de la modification apportée.

L'invention s'applique notamment aux équipements électroniques dotés de petits claviers et de petits écrans pour lesquels l'opération de saisie est particulièrement malaisée. Elle s'applique par exemple aux téléphones mobiles.

## Description

L'invention concerne un procédé de recherche d'une entrée dans un recueil d'informations consultable à partir d'un équipement électronique comportant des moyens de saisie et des moyens d'affichage, ledit procédé consistant notamment:
- à lancer une recherche dans ledit recueil après la saisie d'un caractère,
- à afficher, lorsqu'elle existe, une entrée du recueil qui commence par le caractère saisi ou par la chaîne de caractères qui se termine par le caractère saisi,
- à déplacer un curseur de saisie dans l'entrée affichée.

L'invention concerne également un équipement électronique, notamment un téléphone, comprenant des moyens de saisie, des moyens d'affichage et des moyens de consultation d'un recueil d'informations, lesdits moyens de consultation comportant notamment:
- des moyens pour lancer une recherche dans ledit recueil après la saisie d'un caractère,
- des moyens pour afficher, lorsqu'elle existe, une entrée du recueil qui commence par le caractère saisi ou par la chaîne de caractères qui se termine par le caractère saisi,
- des moyens de déplacement d'un curseur de saisie dans l'entrée affichée.

L'invention trouve des applications notamment pour les équipements électroniques portables.

En effet, la tendance actuelle étant de miniaturiser au maximum les équipements électroniques, notamment les équipements portables, ces derniers sont dans bien des cas dotés de claviers de petite taille sur lesquels le nombre de touches est réduit. Il est alors courant de regrouper plusieurs caractères sur une même touche. C'est le cas par exemple sur les équipements téléphoniques où les lettres A, B et C sont regroupées sur la touche 2, les lettres D, E et F sur la touche 3. . . Dans ce cas, la ième lettre est obtenue en pressant rapidement i fois successives la touche correspondante. L'opération de saisie d'une chaîne de caractères est donc particulièrement malaisée.

Un procédé de recherche d'une entrée dans un recueil d'informations, qui permet de réduire le nombre d'appuis touche nécessaire à la saisie de ladite entrée, est notamment décrit dans la demande internationale de brevet WO96/27947. Ce procédé consiste à rechercher dans le recueil d'informations l'entrée la plus proche de la chaîne de caractères saisie, et à l'afficher. La curseur est ensuite déplacé sur la position suivante lorsque le dernier caractère saisi est identique au caractère de même rang dans l'entrée affichée.

L'invention a pour but de proposer un procédé qui permet de simplifier une telle recherche en réduisant encore le nombre d'appuis touche à réaliser.

Pour cela, un procédé selon l'invention et tel que décrit dans le paragraphe introductif est caractérisé en ce ledit curseur est placé sur le premier caractère de l'entrée affichée, dit caractère discriminateur, qui permet de la discriminer par rapport aux autres entrées du recueil.

De même, un équipement électronique selon l'invention et tel que défini dans le paragraphe introductif est caractérisé en ce que lesdits moyens de déplacement du curseur de saisie permettent de placer le curseur de saisie sur le premier caractère de l'entrée affichée, dit caractère discriminateur, qui permet de la discriminer par rapport aux autres entrées du recueil.

Ainsi, il suffit à l'utilisateur de saisir le caractère correspondant à ce caractère discriminateur dans la chaîne qu'il recherche. La recherche est alors relancée à partir de cette modification apportée, et ainsi de suite jusqu'à ce que la chaîne recherchée ait été trouvée. Le nombre d'opérations de saisie est donc réduit de façon significative pour l'utilisateur.

L'invention sera mieux comprise et d'autres détails apparaîtront à la lumière de la description qui va suivre en regard des dessins annexés qui sont donnés à titre d'exemple non limitatif et dans lesquels:
- la figure 1 est une représentation schématique d'un exemple d'équipement électronique selon l'invention,
- la figure 2 est un organigramme décrivant le fonctionnement d'un procédé selon l'invention.

Dans la suite, l'équipement électronique décrit à titre d'exemple est un équipement téléphonique, et le procédé de recherche décrit est un procédé de recherche d'un nom dans un répertoire téléphonique. La mise en oeuvre de l'invention est en effet particulièrement avantageuse dans ce cas. L'invention n'est toutefois pas limitée à ce type d'équipement.

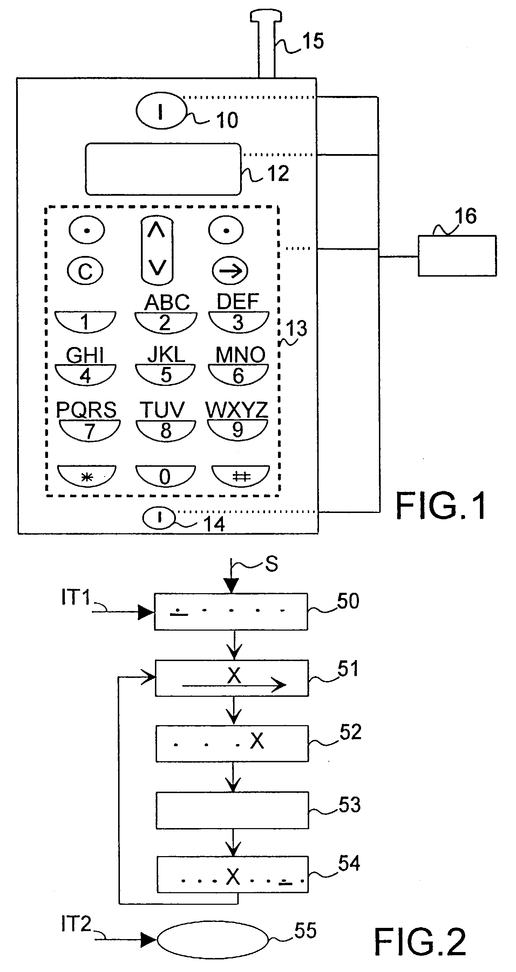

L'équipement électronique représenté sur la figure 1 est un téléphone mobile. Il comporte un haut-parleur écouteur 10, un écran 12, un clavier 13, un micro 14, et une antenne 15. Le clavier 13 comporte d'une part des touches permettant de naviguer dans un menu, notamment une touche notée "C" qui correspond à la fonction annulation et une touche notée "→" qui correspond à la fonction sélection, et d'autre part les douze touches classiques d'un clavier téléphonique: les touches 0 à 9 la touche * et la touche #. De façon classique on a associé à la touche 1 la fonction "espace", à la touche 2 les lettres A, B et C, à la touche 3 les lettres D, E et F, à la touche 4 les lettres G, H et I, à la touche 5, les lettres J, K et L, à la touche 6 les lettres M, N et O, à la touche 7 les lettres P, Q, R et S, à la touche 8 les lettres T, U et V et à la touche 9 les lettres W, X, Y et Z. Ce téléphone est de plus doté d'un ensemble à microprocesseur 16 qui assure son fonctionnement, et qui permet notamment de mettre en oeuvre un procédé selon l'invention. Par exemple, pour un téléphone cellulaire analogique conforme aux normes ETACS ou AMPS cet ensemble à microprocesseur est avantageusement constitué à partir d'un 8051 fabriqué par Philips Semiconductors.

Le procédé de recherche selon l'invention va tout d'abord être expliqué à partir d'un exemple. On considère pour cela un répertoire dont le contenu est le suivant:

### Répertoire

Mariette
Marie Alice
Marie Anne
Marie Antoinette
et l'on suppose que l'utilisateur recherche le nom "Marie Antoinette".

Conformément à l'invention, il appuie une fois sur la touche 6: la lettre "M" apparaît à l'écran, et une première recherche est lancée. La première entrée du répertoire correspondant à la lettre saisie est affichée. Il s'agit de la chaîne de caractères "Mariette". Le curseur est placé sur le premier caractère de cette entrée (appelé caractère discriminateur dans la suite de la description) qui permet de la discriminer par rapport aux autres entrées du répertoire, c'est-à-dire sur la lettre "t". L'utilisateur est alors susceptible de modifier l'entrée affichée en saisissant le caractère correspondant dans la chaîne qu'il recherche, c'est-à-dire un espace (ce qui nécessite d'appuyer une fois sur la touche 1). La chaîne "Marie Alice" qui est la première entrée du répertoire correspondant à la chaîne "Marie " est alors affichée, et le curseur est placé sur la lettre "l". L'utilisateur saisit alors le caractère "n" en appuyant deux fois sur la touche 6. Et la chaîne "Marie Anne" est affichée à l'écran, le curseur étant placé sur la lettre "n". L'utilisateur saisit enfin la lettre "t" en appuyant une fois sur la touche 8. L'entrée recherchée "Marie Antoinette" apparaît alors sur l'écran.

On a résumé les opérations de saisie et les affichages obtenus sur l'écran au cours de cette recherche dans le tableau suivant:

| Saisie | Affichage |
|---|---|
| M (un appui sur la touche 6) | M |
| | Mariette |
| _ (un appui sur la touche 1) | Marie_ |
| | Marie Alice |
| n (deux appuis sur la touche 6) | Marie An |
| | Marie Anne |
| t (un appui sur la touche 8) | Marie Ant |
| | Marie Antoinette |

Ainsi, cinq appuis touches ont été nécessaires pour afficher le nom recherché. A titre comparatif, si l'utilisateur avait dû saisir entièrement la chaîne de caractères "Marie Ant" pour rechercher le nom Marie Antoinette, cela aurait nécessité 15 appuis touches (1 pour M, 1 pour a, 3 pour r, 3 pour i, 2 pour e, 1 pour l'espace, 1 pour A, 2 pour n et 1 pour t).

Un exemple de procédé de recherche selon l'invention va maintenant être décrit en se reportant à l' organigramme de la figure 2.

Le procédé selon l'invention est mis en oeuvre lorsque l'utilisateur sélectionne dans le menu du téléphone l'option "Recherche dans le répertoire". Cette sélection est représenté sur la figure 2 par la flèche S. A la case 50, le curseur est affiché à l'écran afin d'indiquer à l'utilisateur qu'il doit saisir le premier caractère de la chaîne qu'il recherche. A la case 51, le procédé est en attente de la saisie d'un caractère par l'utilisateur: lorsque l'utilisateur appuie sur une touche, un compteur d'une seconde est déclenché. Tant que ce compteur n'est pas arrivé à échéance, le nombre d'appuis touches effectué par l'utilisateur est cumulé. Et lorsque le compteur arrive à échéance, la lettre qui correspond au nombre d'appuis touches effectués est sélectionnée, et le procédé se poursuit à la case 52. A la case 52 la chaîne de caractères qui finit par le dernier caractère saisi est affichée. A la case 53, la procédure de recherche dans le répertoire est lancée. A la case 54, le résultat de la recherche est affiché à l'écran en plaçant le curseur sur le premier caractère discriminateur de la chaîne de caractères affichée. Puis le fonctionnement reprend à la case 51.

A tout instant l'utilisateur est susceptible d'appuyer sur la touche "annulation" ce qui déclenche une interruption IT1 qui permet de reprendre le fonctionnement à la case 50. De même, lorsque la chaîne de caractères affichée à la case 54 correspond à la chaîne recherchée par l'utilisateur, celui-ci appuie sur la touche "sélection" du clavier ce qui déclenche une interruption IT2 qui termine le fonctionnement à la case 55.

Il est important de noter qu'une seule ligne d'écran est suffisante pour mettre en oeuvre le procédé selon l'invention.

Il va de soi que des modifications peuvent être apportées au mode de réalisation qui vient d'être décrit sans que l'on sorte pour cela du cadre de la présente invention.

## Revendications

1. Procédé de recherche d'une entrée dans un recueil d'informations consultable à partir d'un équipement électronique comportant des moyens de saisie et des moyens d'affichage, ledit procédé consistant notamment:
- à lancer une recherche dans ledit recueil après la saisie d'un caractère,
- à afficher, lorsqu'elle existe, une entrée du recueil qui commence par le caractère saisi ou par la chaîne de caractères qui se termine par le caractère saisi,
- à déplacer un curseur de saisie dans l'entrée affichée,
caractérisé en ce que ledit curseur est placé sur le premier caractère de l'entrée affichée, dit caractère discriminateur, qui permet de la discriminer par rapport aux autres entrées du recueil.

2. Procédé selon la revendication 1, caractérisé en ce que ledit recueil est un répertoire téléphonique et en ce que ledit équipement électronique est un téléphone dans lequel ledit répertoire est mémorisé.

3. Equipement électronique comprenant des moyens de saisie, des moyens de saisie, des moyens d'affichage, et des moyens de consultation d'un recueil d'informations, lesdits moyens comportant notamment:
- des moyens pour lancer une recherche dans ledit recueil après la saisie d'un caractère,
- des moyens pour afficher, lorsqu'elle existe, une entrée du recueil qui commence par le caractère saisi ou par la chaîne de caractères qui se termine par le caractère saisi,
- des moyens de déplacement d'un curseur de saisie dans l'entrée affichée,
caractérisé en ce que lesdits moyens de déplacement du curseur de saisie permettent de placer le curseur de saisie sur le premier caractère de l'entrée affichée, dit caractère discriminateur, qui permet de la discriminer par rapport aux autres entrées du recueil.

4. Téléphone comprenant des moyens de saisie, des moyens de saisie, des moyens d'affichage, et des moyens de consultation d'un recueil d'informations, lesdits moyens comportant notamment:
- des moyens pour lancer une recherche dans ledit recueil après la saisie d'un caractère,
- des moyens pour afficher, lorsqu'elle existe, une entrée du recueil qui commence par le caractère saisi ou par la chaîne de caractères qui se termine par le caractère saisi,
- des moyens de déplacement d'un curseur de saisie dans l'entrée affichée,
caractérisé en ce que lesdits moyens de déplacement du curseur de saisie permettent de placer le curseur de saisie sur le premier caractère de l'entrée affichée, dit caractère discriminateur, qui permet de la discriminer par rapport aux autres entrées du recueil.
